# EUROPEAN PATENT SPECIFICATION

(11) **EP 2 501 084 B1**
(45) Date of publication and mention of the grant of the patent: **23.12.2015**
(21) Application number: 10838587.3
(22) Date of filing: 19.09.2010
(51) Int. Cl.: H04L 12/437, H04L 12/703, H04L 12/707, H04L 12/723, H04L 12/403

(54) **TRANSMISSION MULTI-PROTOCOL LABEL SWITCHING NETWORK SYSTEM AND LINK PROTECTION METHOD**
LABEL-SCHALT-NETZWERKSYSTEM MIT MEHREREN ÜBERTRAGUNGSPROTOKOLLEN UND VERKNÜPFUNGSSCHUTZVERFAHREN DAFÜR
SYSTÈME DE RÉSEAU DE COMMUTATION D'ÉTIQUETTES MULTIPROTOCOLES DE TRANSMISSION ET PROCÉDÉ DE PROTECTION DES LIAISONS

(30) Priority: 24.12.2009 CN 200910260891
(43) Date of publication of application: 19.09.2012
(73) Proprietor: ZTE Corporation, Shenzhen, Guangdong 518057 (CN)
(72) Inventor: LENG, Xingxing, Guangdong 518057 (CN)
(74) Representative: Novagraaf Technologies
(86) International application number: PCT/CN2010/077107
(87) International publication number: WO 2011/076024

(56) References cited:
- CN-A- 101 425 971
- CN-A- 101 431 459
- CN-A- 101 599 862
- CN-A- 101 771 610
- ZUFA YANG ZTE CORPORATION P R CHINA: "Applying the extended linear protection switching mechanisms in the T-MPLS ring", ITU-T DRAFTS ; STUDY PERIOD 2005-2008, INTERNATIONAL TELECOMMUNICATION UNION, GENEVA ; CH, vol. Study Group 15 ; 9/15, 1 May 2007 (2007-05-01), pages 1-3, XP017527787, [retrieved on 2007-05-24]
- MA LIN CHINA TELECOM P R CHINA: "Specific Function Type for T-MPLS ring protection APS", ITU-T DRAFTS ; STUDY PERIOD 2005-2008, INTERNATIONAL TELECOMMUNICATION UNION, GENEVA ; CH, vol. Study Group 15 ; 9/15, 1 January 2008 (2008-01-01), pages 1-2, XP017528189, [retrieved on 2008-02-01]
- "Linear protection switching for transport MPLS (T-MPLS) networks; G.8131/Y.1382 (02/07)", ITU-T STANDARD, INTERNATIONAL TELECOMMUNICATION UNION, GENEVA ; CH, no. G.8131/Y.1382 (02/07), 6 February 2007 (2007-02-06), pages 1-24, XP017466005, [retrieved on 2007-11-23]
- EDITORS: "Draft G.8132, T-MPLS shared protection ring (TM-SPRing);TD 428 (WP 3/15)", ITU-T DRAFTS ; STUDY PERIOD 2005-2008, INTERNATIONAL TELECOMMUNICATION UNION, GENEVA ; CH, vol. Study Group 15 ; 9/15, 13 June 2007 (2007-06-13), pages 1-30, XP017526833, [retrieved on 2007-06-13]

## Description

### Technical Field

The present invention relates to the communication field, and in particular, to a Transmission-Multiprotocol Label Switching (T-MPLS) network system and a method for protecting links.

### Background of the Related Art

T-MPLS is a packet transmission network technology standardized by International Telecommunication Union (ITU-T), the data thereof are transmitted based on T-MPLS label. T-MPLS is a connection-oriented technology, which is an application of Multiprotocol Label Switching (MPLS) in transmission network, and connection-oriented OAM (Operation, Administration, Maintenance) function and protection recovery function with transmission feature are added based on MPLS.

T-MPLS satisfies hierarchical structure defined by ITU-TG.805. T-MPLS network can be divided into T-MPLS Medium layer, Section layer (TMS-T-MPLS section), Path layer (TMP-T-MPLS Path) and circuit layer (TMC-T-MPLS Channel) . Wherein, the Medium layer means medium for transmitting, such as fiber, copper cable or wireless, etc.. T-MPLS Section means a physical connection, such as Synchronous Digital Hierarchy (SDH), Ethernet or Wave Length Path. T-MPLS Path means features of a end-to-end logical connection. T-MPLS Channel means features of services, such as type of connection, topology type (point-to-point, point-to-multipoint, multipoint-to-multipoint) and type of service.

T-MPLS OAM runs in T-MPLS area with separated level and separated areas, wherein every level can only detect OAM fault of its own level, comprising OAM of T-MPLS Section, OAM of T-MPLS Path and OAM of T-MPLS Channel.

Survivability of T-MPLS network is realized through network protection and recovery technology. T-MPLS supports end-to-end protection switching which comprises Linear Protection and Ring Protection.

Path Protection is a kind of Linear Protection. Its protection type is with the OAM detection of T-MPLS Path, comprising Protection Type 1+1 and Protection Type 1 : 1. Wherein, the Protection Type 1+1 specifically refers to: two data messages are copied at the entry of a link, which are sent to a master link and a protection link respectively. The data messages are analyzed and a judgment is made at the exit of the link, if the present master link is valid, the data messages of the master link are received and the data messages of the protection link are discarded, otherwise, the data messages of the protection link are received and the data messages of the master link are discarded. Protection Type 1:1 specifically refers to: it is to judge the state of the link at the entry of the link, and if the master link is valid, the data messages are sent out from the master link, if the master link is invalid, the data messages are sent out from the protection link.

Ring Protection is a kind of protection with the OAM detection of T-MPLS Section, specifically, when a node in the network detect that the network goes wrong, the services that have been transmitted to the adjacent node of the node going wrong are switched to another adjacent node.

For the network that has been configured a large number of links, some defects exist when adopting traditional path protection and Ring Protection, that is, if Path Protection is configured, too many OAM alarming messages of T-MPLS Path will be generated when a link goes wrong, thus a large number of OAM alarming messages of T-MPLS Path will occupy overmuch system resources, leading to that the system is busy and the response is not timely. If Ring Protection is configured, the effective protection can not be performed when intermediate communication nodes of multi-section links have faults such as power down etc.

The document "Applying the extended linear protection switching mechanisms in the T-MPLS ring" by ZUFA YANG ZTE CORPORATION P R CHINA, INTERNATIONAL TELECOMMUNICATION UNION, GENEVA discloses working connections which are the same to protected connections in G.8132 draft (reference b), and protection connections for the protection architecture, using the extended linear protection switching mechanism in the T-MPLS ring.

The document "Specific Function Type for T-MPLS ring protection APS" by MA LIN

CHINA TELECOM P R CHINA, INTERNATIONAL TELECOMMUNICATION UNION, GENEVA discusses the necessary to distinguish between T-MPLS APS for ring protection and APS for linear protection, and proposes to use a specific Function Type to identify the APS PDU for T-MPLS ring protection.

The document "Linear protection switching for transport MPLS (T-MPLS) networks; G.8131 /Y.1382 (02/07)", ITU-T STANDARD, INTERNATIONAL TELECOMMUNICATION UNION, GENEVA discloses Unidirectional 1+1 trail protection switching and Bidirectional 1:1 trail protection switching.

The document "Draft G.8132, T-MPLS shared protection ring (TM-SPRinq) ; TD 428 (WP 3/15) " INTERNATIONAL TELECOMMUNICATION UNION, GENEVA discloses T-MPLS shared protection ring.

### Summary of the Invention

The features of the method and apparatus according to the present invention are defined in the independent claims, and the preferable features according to the present invention are defined in the dependent claims.

In view of this, the present invention provides a T-MPLS network system and a method for protecting link to supply more valid link protection for the T-MPLS network system.

To solve the above problem, the present invention provides a T-MPLS network system, comprising:
a master link comprising at least three master communication nodes;
a Ring Protection link locating between two adjacent master communication nodes;
a Linear Protection link locating between the head master communication node and the end master communication node of the master link;
a first switching module configured to adopt the Ring Protection link between two adjacent master communication nodes to transmit data messages when the master link between the two adjacent master communication nodes goes wrong; and
a second switching module configured to adopt the Linear Protection link to transmit data messages when an intermediate master communication node in the master link goes wrong.

In the above T-MPLS network system, the master communication node comprises:
a first detection module configured to implement the Operation, Administration and Maintenance (OAM) detection of T-MPLS Section, judge whether the OAM detection messages of T-MPLS Section sent by the adjacent master communication node through the master link are received, and determine that the master link between the master communication node and its adjacent master communication node goes wrong when the OAM detection messages of T-MPLS Section are not received in a preset detection period; and
a second detection module configured to implement the OAM detection of T-MPLS Path, judge whether the OAM detection messages of T-MPLS Path are received, and determine that an intermediate master communication node of the master link goes wrong when the OAM detection messages of T-MPLS Path are not received in a preset detection period;
wherein, the period for the first detection module implementing the OAM detection of T-MPLS Section is less than the period for the second detection module implementing the OAM detection of T-MPLS Path.

In the above T-MPLS network system, the master communication node also comprises a updating module configured to transmit the OAM detection messages of T-MPLS Path through the Ring Protection link between the master communication node and its adjacent master communication node when the master link between the master communication node and its adjacent master communication node goes wrong.

In the above T-MPLS network system, there is at least one backup communication node in the Ring Protection link; there is at least one backup communication node in the Linear Protection link; and the backup communication node in the Ring Protection link and the backup communication node in the Linear Protection link is achieved with an identical backup communication node.

In the above T-MPLS network system, the Ring Protection link adopts the Path Protection of Protection Type 1+1 or the Path Protection of Protection Type 1:1.

The present invention also provides a method for protecting a link, applied to a T-MPLS network system comprising a master link having at least three master communication nodes, the method comprises the steps as follows:
the master communication node judging whether the master link between the master communication node and its adjacent master communication node goes wrong; when the master link between the master communication node and its adjacent master communication node goes wrong, the master communication node adopting a Ring Protection link between the master communication node and its adjacent master communication node to transmit data messages; and
the master communication node judging whether an intermediate master communication node of the master link goes wrong; when an intermediate master communication node of the master link goes wrong, the master communication node adopting a Linear Protection link between the head and the end master communication nodes of the master link to transmit data messages.

In the above method for protecting a link, the step of the master communication node judging whether the master link between the master communication node and its adjacent master communication node goes wrong comprises: the master communication node implementing the Operation, Administration and Maintenance (OAM) detection of T-MPLS Section, judging whether the OAM detection messages of T-MPLS Section sent by its adjacent communication node through the master link are received, and determining that the master link between the master communication node and its adjacent master communication node goes wrong when the OAM detection messages of T-MPLS Section are not received in a preset detection period; and
the step of the master communication node judging whether an intermediate master communication node of the master link goes wrong comprises: the master communication node implementing the OAM detection of T-MPLS Path, judging whether the OAM detection messages of T-MPLS Path are received, and determining that the intermediate master communication node of the master link goes wrong when the OAM detection messages of T-MPLS Path are not received in a preset detection period;
wherein, the period for the master communication node implementing the OAM detection of T-MPLS Section is less than the period for the master communication node implementing the OAM detection of T-MPLS Path.

In the above method for protecting a link, there is at least one backup communication node in the Ring Protection link; there is at least one backup communication node in the Linear Protection link; and the backup communication node in the Ring Protection link and the backup communication node in the Linear Protection link are achieved with an identical backup communication node.

In the above method for protecting a link, the Ring Protection link adopts Path Protection of Protection Type 1+1 or Path Protection of Protection Type 1:1.

The present invention has beneficial effects as follows:
Because Ring Protection and Linear Protection are configured in the T-MPLS network system simultaneously, a Ring Protection link is used to transmit data messages when a master link goes wrong and a Linear Protection link is used to transmit data messages when an intermediate communication node in the master link goes wrong, thus providing a more valid and reliable link protection for the T-MPLS network system.

### Brief Description of Drawings

FIG. 1 is a structural schematic diagram of the T-MPLS network system according to an embodiment of the present invention;
FIG. 2 is another structural schematic diagram of the T-MPLS network system according to an embodiment of the present invention;
FIG. 3 is a structural schematic diagram of a master communication node according to an embodiment of the present invention;
FIG. 4 is a further structural schematic diagram of the T-MPLS network system according to an embodiment of the present invention;
FIG. 5 is a schematic diagram of the flow of the method for protecting link according to an embodiment of the present invention.

### Preferred Embodiments of the Present Invention

The Specific embodiments of the present invention are further described in detail in combination with the accompanying drawings and examples hereinafter.

The embodiment of the present invention provides a T-MPLS network system, comprising:
a master link comprising at least three master communication nodes;
a Ring Protection link locating between two adjacent master communication nodes, wherein, there is at least one backup communication node in the Ring Protection link;
a Linear Protection link locating between the head master communication node and the end master communication node of the master link, wherein the head master communication node and the end master communication node of the master link refer to the first master communication node and the last master communication node in the master link, the other master communication nodes in the master link are called intermediate master communication nodes, in the Linear Protection link, there is at least one backup communication node, the Linear Protection link can be Path Protection of Protection Type 1+1 and can also be Path Protection of Protection Type 1:1;
a first switching module for adopting the Ring Protection link between two adjacent master communication nodes to transmit data messages when the master link between the two adjacent master communication nodes goes wrong; and
a second switching module for adopting the Linear Protection link to transmit data messages when an intermediate master communication node in the master link goes wrong, wherein if any intermediate master communication node in the master link goes wrong, the Linear Protection link is used to transmit data messages.

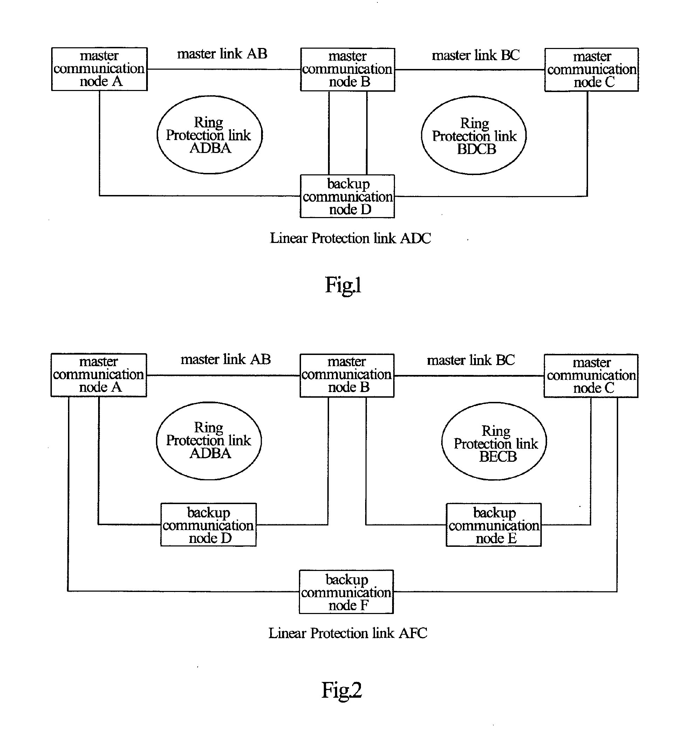

As shown in FIG. 1, it's a schematic diagram of the structure of the T-MPLS network system according to an embodiment of the present invention. The T-MPLS network system comprises three master communication nodes which are respectively a master communication node A, a master communication node B and a master communication node C, wherein, the master communication node A is the head master communication node, the master communication node B is the intermediate master communication node, and the master communication node C is the end master communication node; the master link between the master communication node A and the master communication node B is called a master link AB, and the master link between the master communication node B and the master communication node C is called a master link BC.

There is a Ring Protection link ADBA between the master communication node A and the master communication node B, and there is also a Ring Protection link BDCB between the master communication node B and the master communication node C. As seen from FIG. 1, the backup communication node D not only acts as the backup communication node in Ring Protection link ADBA between the master communication node A and the master communication node B , and also as the backup communication node in Ring Protection link BDCB between the master communication node B and the master communication node C simultaneously. Such a network structure can reduce the system cost effectively. Of course, as seen from FIG. 2, the backup communication node D can be used to act as the backup communication node in the Ring Protection link between the master communication node A and the master communication node B, and the backup communication node E is used as the backup communication node in the Ring Protection link between the master communication node B and the master communication node C. In this case, the Ring Protection link between the master communication node A and the master communication node B is ADBA, and the Ring Protection link between the master communication node B and the master communication node C is BECB.

There is also a Linear Protection link ADC between the head master communication node A and the end master communication node C. As seen from FIG. 1, the backup communication node in the Ring Protection link and the backup communication node in the Linear Protection link are achieved with an identical backup communication node D, that is, part of the Ring Protection link is coincident with part of the Linear Protection link, and such a network structure can further reduce the system cost. Of course, as seen from Fig.2, the Ring Protection link may not be coincident with the Linear Protection link. At this moment, the Linear Protection link between the master communication nodes A and C is AFC.

The Ring Protection link ADBA between the master communication node A and the master communication node B can be used to transmit data messages when the master link AB between the master communication node A and the master communication node B goes wrong, and the Ring Protection link BDCB between the master communication node B and the master communication node C can be used to transmit data messages when the master link BC between the master communication node B and the master communication node C goes wrong. In the above embodiments, when the master link goes wrong, because the way of Ring Protection is adopted, the problem that the system is busy and the response is not timely caused by that a large amount of OAM alarming messages of T-MPLS Path generated when the Linear protection is configured occupy the system resources can be effectively avoided .

The Linear Protection link ADC between the master communication node A and the master communication node C can be used to transmit data messages when the intermediate master communication node B goes wrong (such as power down etc.). In the above embodiments, when the intermediate master link goes wrong, because the way of Linear Protection is adopted, the problem that the effective protection can not be achieved when the intermediate communication nodes goes wrong and only the Ring protection is configured can be avoided effectively.

In the above embodiments, it takes the master link with three master communication node as an example to illustrate the T-MPLS network system according to the embodiments of the present invention. Actually, the number of the master communication nodes in the master link may be more than three, for example, when the master link has four master communication nodes, the first and the fourth master communication nodes are respectively the head and the end master communication nodes, the second and the third master communication node are intermediate communication nodes; there is a Ring Protection link between the adjacent master communication nodes; and the first and the fourth master communication node have a Linear Protection link.

It can be understood that, before implementing switching of the master link and the protection link, it's necessary to detect whether the master link goes wrong. The process of implementing a link detection in the T-MPLS network system will be described in detail hereinafter.

Because Ring Protection is a kind of protection which is performed through OAM detection of T-MPLS Section, the T-MPLS network system needs to implement the OAM detection of T-MPLS Section to judge whether the master link goes wrong. In addition, because the Linear Protection is a kind of protection which is performed through OAM detection of T-MPLS Path, the T-MPLS network system also needs to implement the OAM detection of T-MPLS Path to judge whether an intermediate communication node goes wrong.

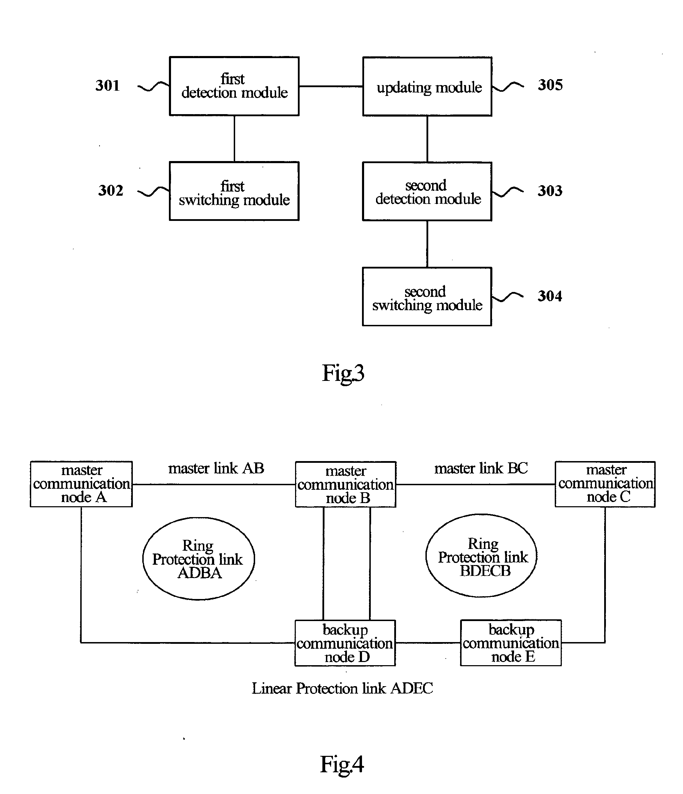

What is shown in Fig.3 is a schematic diagram of the structure of a master communication node according to an embodiment of the present invention. Wherein, the master communication node comprises:
a first detection module 301 for implementing the OAM detection of T-MPLS Section to judge whether the OAM detection messages of T-MPLS Section sent by an adjacent master communication node through the master link are received, and determining that the master link between the master communication node and its adjacent master communication node goes wrong when the OAM detection messages of T-MPLS Section are not received in a preset detection period;
a first switching module 302 for adopting the Ring Protection link between two adjacent master communication nodes to transmit data messages when the master link between two adjacent master communication nodes goes wrong;
a second detection module 303 for implementing the OAM detection of T-MPLS Path to judge whether the OAM detection messages of T-MPLS Path are received, and determining that an intermediate master communication node of the master link goes wrong when the OAM detection messages of T-MPLS Path are not received in a preset detection period, wherein the period for the first detection module implementing the OAM detection of T-MPLS Section is less than the period for the second detection module implementing the OAM detection of T-MPLS Path; and
a second switching module 304 for adopting the Linear Protection link to transmit data messages when an intermediate communication node of the master link goes wrong.

Take the T-MPLS network system of Fig. 1 as an example, it's assumed that the master communication node A is the master communication node shown in Fig.3, of course, it can be understood that the structures of the master communication node B and master communication node C are the same as that of master communication node A.

Wherein, the master communication node A will implement the OAM detection of T-MPLS Section and send the OAM detection messages of T-MPLS Section, TMS A, to the master communication node B through the master link AB. In addition, the master communication node B will also implement the OAM detection of T-MPLS Section and send the OAM detection messages of T-MPLS Section, TMS B1, to the master communication node A through the master link AB, and send the OAM detection messages of T-MPLS Section, TMS B2, to the master communication node C through the master link BC. Meanwhile, the master communication node C will also implement the OAM detection of T-MPLS Section and send the OAM detection messages of T-MPLS Section, TMS C, to the master communication node B through the master link BC.

In addition, the master communication node A will implement the OAM detection of T-MPLS Path and send the OAM detection messages of T-MPLS Path to the master communication node C through the intermediate master communication node B, similarly, the master communication node C will send the OAM detection messages of T-MPLS Path to the master communication node A through the intermediate master communication node B.

When the master link AB between the master communication node A and the master communication node B is normal, the master communication node A can receive the OAM detection message of T-MPLS Section, TMS B1, sent by the master communication node B in a preset detection period. When the master link AB between the master communication node A and the master communication node B goes wrong, the master communication node A cannot receive the OAM detection message of T-MPLS Section, TMS B1, sent by the master communication node B in a preset detection period. Therefore, the master communication node A can judge whether the master link AB between the master communication node A and the master communication node B goes wrong based on whether the OAM detection message of T-MPLS Section, TMS B1, sent by the master communication node B is received in a preset detection period.

In order to ensure that it is to switch to the Ring Protection link rather than to the Linear Protection link when the master link goes wrong, the master communication node A needs to ensure that the period for implementing the OAM detection of T-MPLS Section is less than the period for implementing the OAM detection of T-MPLS Path, that is, when it's discovered that the master link goes wrong when implementing the OAM detection of T-MPLS Section , it is to switch to the Ring Protection link first, since the period for implementing the OAM detection of T-MPLS Path is not expired, thus the problem that the system is busy and the response is not timely caused by that a large amount of OAM alarming messages of T-MPLS Path generated occupy the system resources can be effectively avoided. Generally, the period for implementing the OAM detection of T-MPLS Path is set as three times of the period for implementing the OAM detection of T-MPLS Section.

When the master links AB and BC are all normal, data messages are transmitted between the master communication node A and the master communication node C through the master link ABC.

When the master link AB between the master communication node A and the master communication node B goes wrong, the transmission link of data messages between the master communication node A and the master communication node C is switched to ADBC; at this moment, the OAM detection messages of T-MPLS Path sent by the master communication node A to the master communication node C are transmitted together with the data messages through the transmission link ADBC.

When intermediate master communication node B is normal, the master communication node A can receive the OAM detection messages of T-MPLS Path sent by the master communication node C in a preset detection period. When the intermediate master communication node B goes wrong, the master communication node A cannot receive the OAM detection messages of T-MPLS Path from the master communication node C in a preset detection period. So, the master communication node A can judge whether the intermediate master communication node B goes wrong based on whether the OAM detection messages of T-MPLS Path sent by the master communication node C are received in a preset detection period.

When the intermediate master communication node B goes wrong, the transmission link of data messages between the master communication node A and the master communication node C is switched to ADC.

Based on the above descriptions, it can be known that the master communication node also comprises:
An updating module 305 for transmitting the OAM detection messages of T-MPLS Path through the Ring Protection link between the master communication node and its adjacent master communication node when the master link between the master communication node and its adjacent master communication node goes wrong to ensure that it is not to switch to the Linear Protection link as long as the intermediate master communication node does not go wrong, which can avoid the appearance of a large number of OAM alarming messages of T-MPLS Path.

The method about how to realize fault detection and link switching in the master communication node is described in detail hereafter.

First, the flow of link configuration in the master communication node will be described:
A link forwarding table is saved in every master communication node. It saves two pieces of data exit information, one is the master exit information, and the other one is backup exit information. It also saves a rrindex field corresponding to a fast switching table. The fast switching table has a backup flag bit indicating the exit information of the present data. The backup flag bit can be set as 0 or 1. In an embodiment of the present invention, if the backup flag bit is 0, it indicates that the exit information of the present data is the master exit information, if the backup flag bit is 1, it indicates that the exit information of the present data is the backup exit information.

When the master communication node needs to send data, it looks up the link forwarding table through microcode to obtain the rrindex field from the link forwarding table, then looks up the fast switching table according to the rrindex field, and selects the exit information of the data according to the state of the backup flag bit in the fast switching table.

What is shown in Fig.4 is a further structural schematic diagram of the T-MPLS network system according to an embodiment of the present invention. The T-MPLS network system comprises a master link which has the master communication nodes A, B and C. The T-MPLS network system also comprises two Ring Protection links: a Ring Protection link 1 (ADBA) configured for the master link AB and a Ring Protection link 2 (BDCB) configured for the master link BC. The T-MPLS network system also comprises a Linear Protection link(ADEC) of the protection type 1:1 configured for the master link.

Wherein, the process of configuring the link forwarding table by the master communication node is as follows:
in step A1, the master link is configured by obtaining the information of the master link and writing the data exit information corresponding to the master link into the place of the master exit information of the link forwarding table;
in step A2, the Ring Protection link 1 is configured by distributing a rrindex field for the Ring Protection link 1 and saving the data exit information corresponding to the Ring Protection link 1; and
in step A3, the Linear Protection link is configured by distributing a rrindex field for the Linear Protection link and saving the data exit information corresponding to the Linear Protection link.

Because the data received in the intermediate master communication node B have different entries (the master link entry and the ring entry), thus, two link forwarding tables, i.e. the master link forwarding table and the Ring Protection link forwarding table, need to be configured in the intermediate master communication node B. The process of configuring the link forwarding table by the intermediate master communication node B is as follows:
in step B1, the master link is configured by obtaining the information of the master link and saving the data exit information corresponding to the master link into the master link forwarding table;
in step B2, the Ring Protection link 1 is configured by distributing a rrindex field for the Ring Protection link 1 and saving the data exit information (i.e. a next hop A) corresponding to the Ring Protection link 1 into the Ring Protection link forwarding table; and
in step B3, the Ring Protection link 2 is configured by distributing a rrindex field for the Ring Protection link 2 and saving the data exit information(i.e. a next hop D) corresponding to the Ring Protection link 2.

The flow of link switching in the master communication node is described as follows:

### (1) the Master link AB goes wrong

When the master link AB goes wrong, the link for transmitting data between the master communication node A and the master communication node B is switched to the Ring Protection link 1 from the master link AB, at this moment, the link for transmitting data from the master communication node A to the master communication node B is ADBC. At the same time, the exit information of the OAM detection messages of T-MPLS Path is modified, such that the OAM detection messages of T-MPLS Path following the data messages arrive at the master communication node B along the Ring Protection link 1.

After the master link AB goes wrong, the master communication node A needs to complete the following operations:
in step 1, the rrindex field corresponding to the Ring Protection link is looked up and the backup flag bit corresponding to the rrindex field in the fast switching table is set as 1 ; and
in step 2, data exit information and the rrindex field corresponding to the Ring Protection link are wrote into the place of the backup exit information of the link forwarding table.

After the master link AB goes wrong, the master communication node B needs to complete following operations:
in step 1, the rrindex field corresponding to the Ring Protection link 1 is looked up and the backup flag bit corresponding to the rrindex field in the fast switching table is set as 1 ; and
in step 2, data exit information (i.e. a next hop C) and the rrindex field corresponding to the master link are wrote into the place of the backup exit information of the Ring Protection link forwarding table.

### (2) Both the Master link AB and the master link BC both go wrong

When the master link AB goes wrong, the link for transmitting data between the master communication node A and the master communication node B is switched to the Ring Protection link 1 from the master link AB, at this moment, the link for transmitting data from the master communication node A to the master communication node B is ADBC. The operations which should be completed in the master communication node A and the master communication node B refer to what is described in case (1).

When the master link BC also goes wrong, the link for transmitting data between the master communication node B and the master communication node C is switched to the Ring Protection link 2 from the master link BC, at this moment, the link for transmitting data from the master communication node A to the master communication node C is ADBDEC.

At this moment, the master communication node B also needs to complete following operations:
in step 1, the rrindex field corresponding to the Ring Protection link 2 is looked up and the backup flag bit corresponding to the rrindex field in the fast switching table is set as 1 ; and
in step 2, the exit information (i.e. a next hop D) and the rrindex field corresponding to the Ring Protection link 2 are wrote into the place of the backup exit information of the Ring Protection link forwarding table.

### (3)The intermediate master communication node B goes wrong

T-MPLS Section first detects that a link goes wrong, it implements the switching of the Ring Protection link, then T-MPLS Path also detects that a link goes wrong and thus it is to switch to the Linear Protection link, at this moment, the link for transmitting data from the master communication node A to the master communication node C is ADEC.

When implementing switching to the Linear Protection link, the master communication node A needs to complete following operations:
in step 1, the rrindex field corresponding to the Linear Protection link is looked up and the backup flag bit corresponding to the rrindex field in the fast switching table is set as 1; and
in step 2, the exit information and the rrindex field corresponding to the Linear Protection link are wrote into the place of the backup exit information in the link forwarding table.

With the T-MPLS network system provided by the above embodiments, the Ring Protection and the Linear Protection are configured simultaneously, the Ring Protection link is used to transmit data messages when the master link goes wrong, the Linear Protection link is used to transmit data messages when an intermediate communication node in the master link goes wrong, thus it can provide more valid and reliable link protection for the T-MPLS network system.

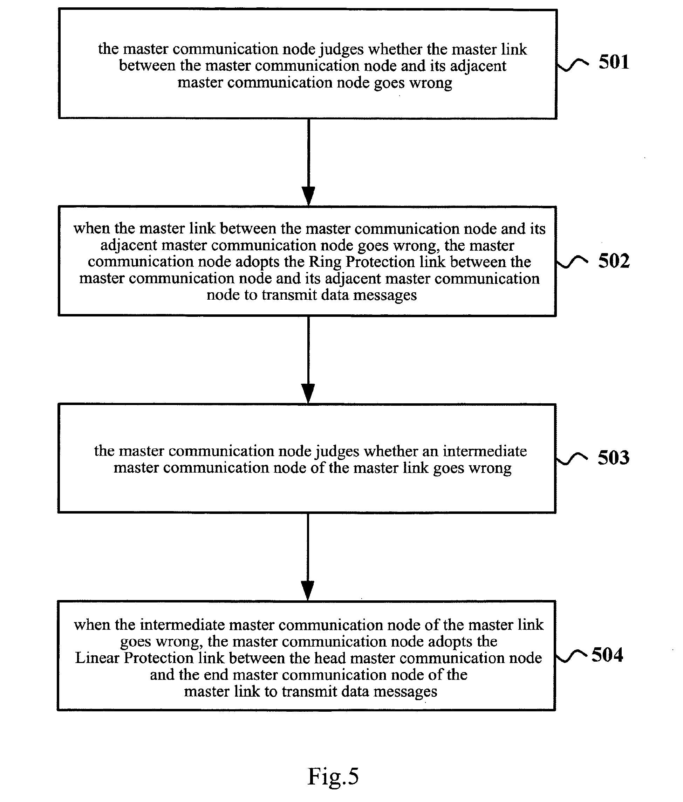

What is shown in Fig.5 is a flow schematic diagram of the method for protecting a link according to an embodiment of the present invention. The method for protecting a link is applied in the T-MPLS network system. The T-MPLS network system comprises the master link comprising at least three master communication nodes. The method for protecting a link comprises following steps:
in step 501, the master communication node judges whether the master link between the master communication node and its adjacent master communication node goes wrong;
in step 502, when the master link between the master communication node and its adjacent master communication node goes wrong, the master communication node adopts the Ring Protection link between the master communication node and its adjacent master communication node to transmit data messages;
in step 503, the master communication node judges whether an intermediate master communication node of the master link goes wrong; and
in step 504, when the intermediate master communication node of the master link goes wrong, the master communication node adopts the Linear Protection link between the head master communication node and the end master communication node of the master link to transmit data messages. The head and the end master communication nodes of the master link refer to the first master communication node and the last master communication node in the master link, and the other master communication nodes in the master link are called intermediate master communication nodes. The Linear Protection link adopts the Path Protection of Protection Type 1+1, and it also can adopt the Path Protection of Protection Type 1:1.

In the Ring Protection link, there's at least one backup communication node. In the Linear Protection link, there's at least one backup communication node. In order to reduce the system cost, the backup communication node in the Ring Protection link and the backup communication node in the Linear Protection link can be achieved with an identical backup communication node.

In the above embodiments, the Ring Protection link between one master communication node and its adjacent master communication node can be used to transmit data messages when the master link between the master communication node and its adjacent master communication node goes wrong, at this moment, because the way of Ring Protection is adopted, the problem that the system is busy and the response is not timely caused by that a large amount of OAM alarming messages of T-MPLS Path generated when the Liner protection is configured occupy the system resources can be effectively avoided. The Linear Protection link between the head and the end master communication nodes is used to transmit data messages when the intermediate master communication node of the master link goes wrong, at this moment, because the way of Linear Protection is adopted, the problem that the effective protection can not be achieved when the intermediate communication nodes goes wrong and only the Ring protection is configured can be avoided effectively.

What can be understood is that, before implementing the switching between the master link and the protection link, it's necessary to detect whether the master link goes wrong. The process of implementing the link detection by the master communication node will be described in detail hereafter.

Because the Ring Protection is a kind of protection with OAM detection of T-MPLS Section, the master communication node needs to implementing the OAM detection of T-MPLS Section to judge whether the master link goes wrong; in addition, the Linear Protection is a kind of protection with OAM detection of T-MPLS Path, thus the master communication node also needs to implement the OAM detection of T-MPLS Path at the same time to judge whether the intermediate communication node goes wrong.

That is, the above step 501 specifically is:
the master communication node implementing the OAM detection of T-MPLS Section, judging whether the OAM detection messages of T-MPLS Section sent by its adjacent master communication node through the master link are received, and determining that the master link between the master communication node and its adjacent master communication node goes wrong when the OAM detection messages of T-MPLS Section are not received in a preset detection period;
the above step 503 specifically is:
   the master communication node implementing the OAM detection of T-MPLS Path, judging whether the OAM detection messages of T-MPLS Path are received, and determining that the intermediate master communication node of the master link goes wrong when the OAM detection messages of T-MPLS Path are not received in a preset detection period.

In order to ensure that it is to switch to the Ring Protection link rather than to the Linear Protection link when the master link goes wrong, the master communication node A needs to ensure that the period for implementing the OAM detection of T-MPLS Section is less than the period for implementing the OAM detection of T-MPLS Path, that is, when it's discovered that the master link goes wrong when implementing the OAM detection of T-MPLS Section, it is to switch to the Ring Protection link first, since the period for implementing the OAM detection of T-MPLS Path is not expired, thus the problem that the system is busy and the response is not timely caused by that a large amount of OAM alarming messages of T-MPLS Path generated occupy the system resources can be effectively avoided. Generally, the period for implementing the OAM detection of T-MPLS Path is set as three times of the period for implementing the OAM detection of T-MPLS Section.

When the master link between the master communication node and its adjacent master communication node goes wrong, the transmission link of data messages between the master communication node and its adjacent master communication node is switched to the Linear Protection link, at this moment, the OAM detection messages of T-MPLS Path sent by the master communication node are also transmitted through the Ring Protection link together with data messages.

It can be known from the above description that, before the master communication node implements the OAM detection of T-MPLS Path and judges whether it receives the OAM detection messages of T-MPLS Path, the method also comprises:
when the master link between the master communication node and its adjacent master communication node goes wrong, the master communication node sending the OAM detection messages of T-MPLS Path through the Ring Protection link between the master communication node and its adjacent master communication node.

According to the method provided by the above embodiments, if the Ring Protection and the Linear protection are configured in the T-MPLS network system simultaneously, a Ring Protection link is used to transmit data messages when a master link goes wrong and a Linear Protection link is used to transmit data messages when an intermediate communication node in the master link goes wrong, thus providing a more valid and reliable link protection for the T-MPLS network system.

The above description is only for the preferred embodiments of the present invention. It should be noted that, for those skilled in the art, some improvements and modifications can be made without departing from the principle of the present invention, and all of these improvements and modifications should be subjected to the protection scope of the present invention as defined in the appended claims.

### Industrial Applicability

The Ring Protection and the Liner protection are configured in the T-MPLS network system simultenously, a Ring Protection link is used to transmit data messages when a master link goes wrong and a Linear Protection link is used to transmit data messages when an intermediate communication node in the master link goes wrong, thus providing a more valid and reliable link protection for the T-MPLS network system

## Claims

1. A Transmission-Multiprotocol Label Switching (T-MPLS) network system, comprising:
a master link comprising at least three master communication nodes;
a Linear Protection link locating between a head master communication node and an end master communication node of the master link wherein there is at least one backup communication node in the Linear Protection link;
**characterized in that** it further comprises a Ring Protection link locating between two adjacent master communication nodes wherein there is at least one backup communication node in the Ring Protection link;
and **in that** each master communication node comprises a first switching module (302) and a second switching module (304), the first switching module (302) being configured to adopt a Ring Protection link between the two adjacent master communication nodes to transmit data messages when a master link between the two adjacent master communication nodes is determined going wrong and the second switching module (304) being configured to adopt the Linear Protection link to transmit data messages when an intermediate master communication node in the master link is determined going wrong.

2. The T-MPLS network system according to claim 1, wherein each master communication node further comprises:
a first detection module (301) configured to implement an Operation, Administration and Maintenance (OAM) detection of T-MPLS Section, judge whether OAM detection messages of T-MPLS Section sent by an adjacent master communication node thereof through the master link are received, and determine that a master link between the master communication node and the adjacent master communication node thereof goes wrong when the OAM detection messages of T-MPLS Section are not received in a preset detection period; and
a second detection module (303) configured to implement an OAM detection of T-MPLS Path, judge whether OAM detection messages of T-MPLS Path are received, and determine that an intermediate master communication node of the master link goes wrong when the OAM detection messages of T-MPLS Path are not received in a preset detection period;
and wherein a period for the first detection module implementing the OAM detection of T-MPLS Section is less than a period for the second detection module implementing the OAM detection of T-MPLS Path.

3. The T-MPLS network system according to claim 2, wherein the master communication node also comprises an updating module (305) configured to transmit the OAM detection messages of T-MPLS Path through the Ring Protection link between the master communication node and the adjacent master communication node thereof when the master link between the master communication node and the adjacent master communication node thereof is determined going wrong.

4. The T-MPLS network system according to claim 1, wherein the backup communication node in the Ring Protection link and the backup communication node in the Linear Protection link are achieved with an identical backup communication node.

5. The T-MPLS network system according to claim 1, wherein the Ring Protection link adopts a Path Protection of a Protection Type 1+1 or a Path Protection of a Protection Type 1:1.

6. A method for protecting a link, applied to a Transmission-Multiprotocol Label Switching (T-MPLS) network system comprising a master link having at least three master communication nodes, **characterized in that** the method comprises following steps:
the master communication node judging whether the master link between the master communication node and an adjacent master communication node thereof goes wrong (501); when the master link between the master communication node and the adjacent master communication node thereof is determined going wrong, the master communication node adopting a Ring Protection link between the master communication node and the adjacent master communication node thereof to transmit data messages(502), wherein there is at least one backup communication node in the Ring Protection link; and
the master communication node judging whether an intermediate master communication node of the master link goes wrong (503); when the intermediate master communication node of the master link is determined going wrong, the master communication node adopting a Linear Protection link between a head master communication node and an end master communication node of the master link to transmit data messages (504), wherein there is at least one backup communication node in the Linear Protection link.

7. The method for protecting a link according to claim 6, wherein:
the step of the master communication node judging whether the master link between the master communication node and an adjacent master communication node thereof goes wrong (501) comprises: the master communication node implementing an Operation, Administration and Maintenance (OAM) detection of T-MPLS Section, judging whether OAM detection messages of T-MPLS Section sent by the adjacent master communication node thereof through the master link are received, and determining that the master link between the master communication node and the adjacent master communication node thereof goes wrong when the OAM detection messages of T-MPLS Section are not received in a preset detection period; and
the step of the master communication node judging whether an intermediate master communication node of the master link goes wrong (502) comprises: the master communication node implementing an OAM detection of T-MPLS Path, judging whether OAM detection messages of T-MPLS Path are received, and determining that the intermediate master communication node of the master link goes wrong when the OAM detection messages of T-MPLS Path are not received in a preset detection period;
and wherein a period for the master communication node implementing the OAM detection of T-MPLS Section is less than a period for the master communication node implementing the OAM detection of T-MPLS Path.

8. The method for protecting a link according to claim 6, wherein the backup communication node in the Ring Protection link and the backup communication node in the Linear Protection link are achieved with an identical backup communication node.

9. The method for protecting a link according to claim 6, wherein the Ring Protection link adopts a Path Protection of a Protection Type 1+1 or a Path Protection of a Protection Type 1:1.

## Patentansprüche

1. Label-Schalt-Netzwerksystem mit mehreren Übertragungsprotokollen (T-MPLS), umfassend:
Masterverbindung, umfassend mindestens drei Masterkommunikationsknoten;
Linearschutzverbindung zwischen einem Haupt-Masterkommunikationsknoten und einem End-Masterkommunikationsknoten der Masterverbindung, wobei die Linearschutzverbindung mindestens einen Backup-Kommunikationsknoten enthält;
**dadurch gekennzeichnet, dass** diese darüber hinaus eine Ringschutzverbindung zwischen zwei benachbarten Masterkommunikationsknoten umfasst, wobei die Ringschutzverbindung mindestens einen Backup-Kommunikationsknoten enthält;
und wobei jeder Masterkommunikationsknoten ein erstes Vermittlungsmodul (302) und ein zweites Vermittlungsmodul (304) umfasst, wobei das erste Vermittlungsmodul (302) so konfiguriert ist, dass es eine Ringschutzverbindung zwischen den zwei benachbarten Masterkommunikationsknoten zur Übertragung von Datenmeldungen übernimmt, wenn in einer Masterverbindung zwischen den beiden benachbarten Masterkommunikationsknoten ein Fehler festgestellt wird und das zweite Vermittlungsmodul (304) so konfiguriert ist, dass es die Linearschutzverbindung zur Übertragung von Datenmeldungen übernimmt, wenn in einem Zwischen-Masterkommunikationsknoten in der Masterverbindung ein Fehler festgestellt wird.

2. T-MPLS Netzwerksystem nach Anspruch 1, wobei jeder Masterkommunikationsknoten weiter umfasst:
ein erstes Detektionsmodul (301), konfiguriert zur Implementierung einer Operation, Administration and Maintenance (OAM) Detektion des T-MPLS Abschnitts, die darüber urteilt, ob die durch einen benachbarten Masterkommunikationsknoten desselben gesendeten OAM-Detektionsmeldungen des T-MPLS Abschnitts durch die Masterverbindung erhalten werden, und bestimmt, dass in einer Masterverbindung zwischen dem Masterkommunikationsknoten und dessen Zwischen-Masterkommunikationsknoten ein Fehler vorliegt, wenn die OAM-Detektionsmeldungen des T-MPLS Abschnitts nicht innerhalb einer voreingestellten Detektionszeit erhalten werden; und
ein zweites Detektionsmodul (303), konfiguriert zur Implementierung einer OAM-Detektion des T-MPLS-Pfads, die darüber urteilt, ob die OAM-Detektionsmeldungen des T-MPLS-Pfads erhalten werden, und bestimmt, dass in einem Zwischen-Masterkommunikationsknoten der Masterverbindung ein Fehler vorliegt, wenn die OAM-Detektionsmeldungen des T-MPLS-Pfads nicht innerhalb einer voreingestellten Detektionszeit erhalten werden;
und wobei die Zeit für das erste Detektionsmodul, das die OAM-Detektion des T-MPLS Abschnitts implementiert, geringer ist als die Zeit für das zweite Detektionsmodul, das die OAM-Detektion des T-MPLS-Pfads implementiert.

3. T-MPLS-Netzwerksystem nach Patentanspruch 2, wobei der Masterkommunikationsknoten auch ein Aktualisierungsmodul (305) umfasst, das zur Übertragung der OAM-Detektionsmeldungen des T-MPLS-Pfads durch die Ringschutzverbindung zwischen dem Masterkommunikationsknoten und dessen benachbartem Masterkommunikationsknoten konfiguriert wird, wenn in der Masterverbindung zwischen dem Masterkommunikationsknoten und dessen benachbartem Masterkommunikationsknoten ein Fehler festgestellt wird.

4. T-MPLS-Netzwerksystem nach Patentanspruch 1, wobei der Backup-Kommunikationsknoten in der Ringschutzverbindung und der Backup-Kommunikationsknoten in der Linearschutzverbindung über einen identischen Backup-Kommunikationsmodus erreicht werden.

5. T-MPLS-Netzwerksystem nach Patentanspruch 1, wobei die Ringschutzverbindung einen Pfadschutz vom Schutztyp 1+1 oder einen Pfadschutz vom Schutztyp 1:1 übernimmt.

6. Verfahren zum Schutz einer Verbindung, angewandt auf ein Label-Schalt-Netzwerksystem mit mehreren Übertragungsprotokollen (T-MPLS) umfassend eine Masterverbindung mit mindestens drei Masterkommunikationsknoten, **dadurch gekennzeichnet, dass** dem Verfahren folgende Schritte umfasst:
der Masterkommunikationsknoten urteilt darüber, ob in der Masterverbindung zwischen dem Masterkommunikationsknoten und einem von dessen benachbarten Masterkommunikationsknoten ein Fehler vorliegt (501); wenn in der Masterverbindung zwischen dem Masterkommunikationsknoten und dessen benachbartem Masterkommunikationsknoten ein Fehler festgestellt wird, übernimmt der Masterkommunikationsknoten eine Ringschutzverbindung zwischen dem Masterkommunikationsknoten und dessen benachbartem Masterkommunikationsknoten, um Datenmeldungen (502) zu übermitteln, wobei die Ringschutzverbindung mindestens einen Backup-Kommunikationsknoten enthält; und der Masterkommunikationsknoten urteilt darüber, ob in einem Zwischen-Masterkommunikationsknoten des Masterkommunikationsknotens ein Fehler in der Masterverbindung vorliegt (503); wenn im Zwischen-Masterkommunikationsknoten der Masterverbindung ein Fehler festgestellt wird, übernimmt der Masterkommunikationsknoten eine Linearschutzverbindung zwischen einem Haupt-Masterkommunikationsknoten und einem End-Masterkommunikationsknoten der Masterverbindung zur Übermittlung von Datenmeldungen (504), wobei zu der Linearschutzverbindung mindestens ein Backup-Kommunikationsknoten gehört.

7. Verfahren zum Schutz einer Verbindung nach Patentanspruch 6, wobei: der Schritt des Masterkommunikationsknotens darüber urteilt, ob in der Masterverbindung zwischen dem Masterkommunikationsknoten und einem von dessen benachbarten Masterkommunikationsknoten ein Fehler vorliegt (501), umfassend: der Masterkommunikationsknoten implementiert eine Operation, Administration and Maintenance (OAM) Detektion eines T-MPLS Abschnitts, der darüber urteilt, ob die durch dessen benachbarten Masterkommunikationsknoten gesendeten OAM-Detektionsmeldungen des T-MPLS Abschnitts durch die Masterverbindung erhalten werden, und bestimmt, dass in der Masterverbindung zwischen dem Masterkommunikationsknoten und dessen benachbartem Masterkommunikationsknoten ein Fehler vorliegt, wenn die OAM-Detektionsmeldungen des T-MPLS Abschnitts nicht innerhalb einer voreingestellten Detektionszeit erhalten werden; und
der Schritt des Masterkommunikationsknotens urteilt darüber, ob in einem Zwischen-Masterkommunikationsknoten der Masterverbindung (502) ein Fehler vorliegt, umfassend: der Masterkommunikationsknoten implementiert eine OAM-Detektion des T-MPLS-Pfads und urteilt darüber, ob OAM-Detektionsnachrichten des T-MPLS-Pfads erhalten werden und bestimmt, dass im Zwischen-Masterkommunikationsknoten der Masterverbindung ein Fehler vorliegt, wenn die OAM-Detektionsnachrichten des T-MPLS-Pfads nicht innerhalb einer voreingestellten Detektionszeit erhalten werden;
und wobei die Zeit für den Masterkommunikationsknoten, der die OAM-Detektion des T-MPLS Abschnitts implementiert, geringer ist als die Zeit für den Masterkommunikationsknoten, der die OAM-Detektion des T-MPLS-Pfads implementiert.

8. Verfahren zum Schutz einer Verbindung nach Patentanspruch 6, wobei der Backup-Kommunikationsknoten in der Ringschutzverbindung und der Backup-Kommunikationsknoten in der Linearschutzverbindung über denselben Backup-Kommunikationsmodus erreicht werden.

9. Verfahren zum Schutz einer Verbindung nach Patentanspruch 6, wobei die Ringschutzverbindung einen Pfadschutz vom Schutztyp 1+1 oder einen Pfadschutz vom Schutztyp 1:1 übernimmt.

## Revendications

1. Système de réseau à commutation d'étiquettes à plusieurs protocoles de transmission, T-MPLS, comprenant :
une liaison principale comprenant au moins trois noeuds de communication principaux ;
une liaison de protection linéaire se trouvant entre un noeud de communication principal de début et un noeud de communication principal de fin de la liaison principale, dans lequel il y a au moins un noeud de communication de secours dans la liaison de protection linéaire ;
**caractérisé en ce qu'**il comprend en outre une liaison de protection circulaire se trouvant entre deux noeuds de communication principaux adjacents, dans lequel il y a au moins un noeud de communication de secours dans la liaison de protection circulaire ;
et **en ce que** chaque noeud de communication principal comprend un premier module de commutation (302) et un deuxième module de commutation (304), le premier module de commutation (302) étant configuré pour adopter une liaison de protection circulaire entre les deux noeuds de communication principaux adjacents pour transmettre des messages de données lorsqu'il est déterminé qu'une liaison principale entre les deux noeuds de communication principaux adjacents est défaillante et le deuxième module de commutation (304) étant configuré pour adopter la liaison de protection linéaire pour transmettre des messages de données lorsqu'il est déterminé qu'un noeud de communication principal intermédiaire dans la liaison principale est défaillant.

2. Système de réseau T-MPLS selon la revendication 1, dans lequel chaque noeud de communication principal comprend en outre :
un premier module de détection (301) configuré pour mettre en oeuvre une détection de fonctionnement, administration et maintenance, OAM, d'une section T-MPLS, juger si des messages de détection OAM de la section T-MPLS envoyés par un noeud de communication principal adjacent à celui-ci par l'intermédiaire de la liaison principale sont reçus, et déterminer qu'une liaison principale entre le noeud de communication principal et le noeud de communication principal adjacent à celui-ci est défaillante lorsque les messages de détection OAM de la section T-MPLS ne sont pas reçus au cours d'une période de détection préréglée ; et
un deuxième module de détection (303) configuré pour mettre en oeuvre une détection OAM d'une voie T-MPLS, juger si des messages de détection OAM de la voie T-MPLS sont reçus, et déterminer qu'un noeud de communication principal intermédiaire de la liaison principale est défaillant lorsque les messages de détection OAM de la voie T-MPLS ne sont pas reçus au cours d'une période de détection préréglée ;
et dans lequel une période au cours de laquelle le premier module de détection met en oeuvre la détection OAM de la section T-MPLS est inférieure à une période au cours de laquelle le deuxième module de détection met en oeuvre la détection OAM de la voie T-MPLS.

3. Système de réseau T-MPLS selon la revendication 2, dans lequel le noeud de communication principal comprend également un module de mise à jour (305) configuré pour transmettre les messages de détection OAM de la voie T-MPLS par l'intermédiaire de la liaison de protection circulaire entre le noeud de communication principal et le noeud de communication principal adjacent à celui-ci lorsqu'il est déterminé que la liaison principale entre le noeud de communication principal et le noeud de communication principal adjacent à celui-ci est défaillante.

4. Système de réseau T-MPLS selon la revendication 1, dans lequel le noeud de communication de secours dans la liaison de protection circulaire et le noeud de communication de secours dans la liaison de protection linéaire sont réalisés avec un noeud de communication de secours identique.

5. Système de réseau T-MPLS selon la revendication 1, dans lequel la liaison de protection circulaire adopte une protection de voie d'un type de protection 1+1 ou une protection de voie d'un type de protection 1:1.

6. Procédé de protection d'une liaison, appliqué à un système de réseau à commutation d'étiquettes à plusieurs protocoles de transmission, T-MPLS, comprenant une liaison principale comprenant au moins trois noeuds de communication principaux, **caractérisé en ce que** le procédé comprend les étapes suivantes :
le noeud de communication principal juge si la liaison principale entre le noeud de communication principal et un noeud de communication principal adjacent à celui-ci est défaillante (501) ; lorsqu'il est jugé que la liaison principale entre le noeud de communication principal et le noeud de communication principal adjacent à celui-ci est défaillante, le noeud de communication principal adopte une liaison de protection circulaire entre le noeud de communication principal et le noeud de communication principal adjacent à celui-ci pour transmettre des messages de données (502), dans lequel il y a au moins un noeud de communication de secours dans la liaison de protection circulaire ; et
le noeud de communication principal juge si un noeud de communication principal intermédiaire de la liaison principale est défaillant (503) ; lorsqu'il est jugé que le noeud de communication principal intermédiaire de la liaison principale est défaillant, le noeud de communication principal adopte une liaison de protection linéaire entre un noeud de communication principal de début et un noeud de communication principal de fin de la liaison principale pour transmettre des messages de données (504), dans lequel il y a au moins un noeud de communication de secours dans la liaison de protection linéaire.

7. Procédé de protection d'une liaison selon la revendication 6, dans lequel :
l'étape à laquelle le noeud de communication principal juge si la liaison principale entre le noeud de communication principal et un noeud de communication principal adjacent à celui-ci est défaillante (501) comprend : le noeud de communication principal met en oeuvre une détection de fonctionnement, administration et maintenance, OAM, d'une section T-MPLS, juge si des messages de détection OAM de la section T-MPLS envoyés par le noeud de communication principal adjacent à celui-ci par l'intermédiaire de la liaison principale sont reçus et détermine que la liaison principale entre le noeud de communication principal et le noeud de communication principal adjacent à celui-ci est défaillante lorsque les messages de détection OAM de la section T-MPLS ne sont pas reçus au cours d'une période de détection préréglée ; et
l'étape à laquelle le noeud de communication principal juge si un noeud de communication principal intermédiaire de la liaison principale est défaillant (502) comprend : le noeud de communication principal met en oeuvre une détection OAM d'une voie T-MPLS, juge si des messages de détection OAM de la voie T-MPLS sont reçus, et détermine que le noeud de communication principal intermédiaire de la liaison principale est défaillant lorsque les messages de détection OAM de la voie T-MPLS ne sont pas reçus au cours d'une période de détection préréglée ;
et dans lequel une période au cours de laquelle le noeud de communication principal met en oeuvre la détection OAM de la section T-MPLS est inférieure à une période au cours de laquelle le noeud de communication principal met en oeuvre la détection OAM de la voie T-MPLS.

8. Procédé de protection d'une liaison selon la revendication 6, dans lequel le noeud de communication de secours dans la liaison de protection circulaire et le noeud de communication de secours dans la liaison de protection linéaire sont réalisés avec un noeud de communication de secours identique.

9. Procédé de protection d'une liaison selon la revendication 6, dans lequel la liaison de protection circulaire adopte une protection de voie d'un type de protection 1+1 ou une protection de voie d'un type de protection 1:1.
